Europäisches Patentamt

European Patent Office

Office européen des brevets

(11) Publication number: **0 042 267**
**B1**

(12)  **EUROPEAN PATENT SPECIFICATION**

(45) Date of publication of patent specification: **15.05.85**

(51) Int. Cl.⁴: **A 61 C 1/00**

(21) Application number: **81302621.8**

(22) Date of filing: **12.06.81**

(54) **A dental apparatus having at least one drilling instrument and an associated operator unit.**

(30) Priority: **13.06.80 DK 2551/80**

(43) Date of publication of application:
**23.12.81 Bulletin 81/51**

(45) Publication of the grant of the patent:
**15.05.85 Bulletin 85/20**

(84) Designated Contracting States:
**AT BE CH DE FR GB IT LI NL SE**

(56) References cited:
**DE-B-1 466 974**
**GB-A- 894 024**
**GB-A-1 166 665**

(73) Proprietor: **A/S Flex Dental**
**No.4 Lyngager**
**DK-2600 Glostrup (DK)**

(72) Inventor: **Henrichsen, Frank**
**No.27 Peter Petersens Alle**
**DK-2791 Dragör (DK)**
Inventor: **Hansen, Flemming Allan**
**No.14 Mellemvej**
**DK-2750 Ballerup (DK)**
Inventor: **Sörensen, Kim**
**No.14 Fortunvaenget**
**DK-2800 Lyngby (DK)**

(74) Representative: **Carpmael, John William Maurice et al**
**CARPMAELS & RANSFORD 43 Bloomsbury Square**
**London, WC1A 2RA (GB)**

Courier Press, Leamington Spa, England.

EP 0 042 267 B1

## Description

The invention relates to dental apparatus comprising at least one drilling instrument and an operator unit with a control member which is movable against spring action out of a home position for energizing and controlling said drilling instrument through an instrument energizing, said drilling instrument being provided with a water spraying device and an air blowing device which for producing a coolant spray during operation of the instrument are connected to a water supply and an air supply, respectively, through valve devices controlled by water spray and air blow energizing devices connected to said instrument energizing device, a selectively actuatable air blow energizing device with an associated valve device being provided at least for said air blowing device for producing a pure air blow during standstill of the instrument.

Particularly when using a drilling instrument provided with a coolant spraying device by means of which a coolant composed, for example, of water and air is sprayed during operation of the drilling instrument, it is necessary subsequent to the drilling operation to perform a drying operation of the cavity resulting therefrom by means of an air blow which in known apparatus of the above mentioned kind is produced by selective actuation of a separate operation member for influencing the selectively actuatable air blow energizing device which may be constituted by the same air blow energizing device serving for supply of air to the coolant spray, but is preferably constituted by a separate device allowing connection to an air supply having a higher pressure than used for the air supply to the coolant. From GB—A—1 166 665 it is known to actuate a so-called chip blower by operation of a separate control member in a foot controller serving also for the actuation and control of the drilling instruments.

According to the invention, a simplification in respect of operation is obtained by which use of a separate operation member for the air blow to be produced in continuation of a drilling operation is obtained in that the selectively actuatable air blow energizing device is connected to said operator unit for producing an opening signal for the associated valve device in response to the return of said control member to said home position following a movement out of said position.

Thereby, the air blow will be automatically energized subsequent to each operation of the drilling instrument. Contrary to prior art devices as mentioned above, drying of a cavity made by the preceding drilling operation will then be effected without any delay, and the risk of erroneous chip blow actuation is reduced.

In a preferred embodiment of the invention the dental apparatus is constructed so that a timing device is connected between said selectively actuatable air blow energizing device and said operator unit for measuring the duration of the movement of the control member out of said home position and said selectively actuatable air blow energizing device is constructed to produce first or second opening signals for the associated valve device in response to the duration of the movement of the control member being shorter or longer, respectively, than a prescribed minimum duration.

In connection with this embodiment, if the control circuit is constructed so that energizing of the drilling instrument is only taking place, when the duration of the movement of the control member out of the home position exceeds the prescribed minimum duration, the drilling instrument may serve at a shorter duration of the movement of the control member as a separate air blowing device to produce an air blow, for example, in advance of a drilling operation.

In order to obtain a more efficient drying after a drilling operation, for example, with accompanying coolant spray, said timing device is preferably constructed so that said first opening signal comprises a single opening pulse, whereas said second opening signal comprises at least two succeeding opening pulses of different duration.

In the following, the invention will be explained in further detail with reference to the schematical drawing, which shows a simplified diagram of an embodiment of a dental apparatus according to the invention.

In the schematical drawing, which shows only the details necessary for understanding the invention, there is attached to the shaft of a drilling instrument 1, which in the embodiment shown is powered by an air turbine, a water spraying device 2 on one hand and an air blowing device 3 on the other hand, said devices cooperating for spraying a coolant composed of water and air during operation of the drilling instrument 1.

Compressed air is supplied to the air turbine of the drilling instrument 1 by means of a magnetic valve 4, which is opened by a signal $V_I$ supplied through a contact 5, which is closed by means of an energizing signal from an instrument energizing device 6. Simultaneously, this signal from the instrument energizing device 6 is supplied to a water spray energizing device 7 and an air blow energizing device 8, whereby contacts 9 and 10 are closed to supply opening signals $V_v$ and $V_l$ to magnetic valves 11 and 12, respectively, which are thereby opened for the supply of water and air, respectively, to the water spraying device 2 and the air blowing device 3 to produce a coolant spray during the operation of the instrument.

In the example illustrated in which the drilling instrument 1 is controlled by an on-off control, the energizing signal from the circuit 6 is produced by means of an operator unit 13 such as a foot-contact having a control member 14, which is movable out of a home position against spring action.

The operator unit 13 may comprise, for example, a normally open contact 15, which is closed as soon as the control member 14 leaves the home position shown, whereby an input signal is supplied to a timing device 16 to which the instrument energizing device 6 is connected at an output 17.

The timing device 16 is constructed to measure the duration of the closure of the contact 15 corresponding to the movement of the control member 14 out of the home position so that only when the movement of the control member 14 exceeds a prescribed minimum time a signal is supplied at the output 17 for actuating the instrument energizing device 6.

For automatic production of a blow of pure air at the return of the control member 14 to the home position subsequent to movement out of this position, the air blowing device 3 is connected in the embodiment shown to a separate air supply having a higher pressure than used for the supply of air to the coolant by means of the magnetic valve 12. This pure air blow is controlled by a separate magnetic valve 18, which is activated by closure of a contact 19 controlled by a separate air blow energizing device 20 having two signal inputs 21 and 22, which are connected individually to outputs 23 and 24, respectively, of the timing device 16. However, the selective actuation of the pure air blow through the device 3 may also take place by means of the same air blow energizing device 8, which controls the supply of air through the coolant.

After return of the control member 14 to the home position a first or a second control signal is supplied from the timing device 16 to said inputs 21 and 22 of the air blow energizing device 20 in dependence on the duration of the closure of the contact 15 resulting from movement of the control member out of the home position having a shorter or longer duration than said prescribed minimum time.

In response to this signal on inputs 21 and 22 the air blow energizing device 20 generates either a first or a second opening signal for the contact 19. The first opening signal generated in response to the signal on the input 21 and caused subsequent to a short movement of the control member 14 not resulting in actuation of the instrument energizing device 6 consists preferably of a single pulse having a duration of 2 seconds, for example, whereas the second opening signal generated in response to a signal on the input 22 and caused by the return of the control member 14 to the home position subsequent to operation of the drilling instrument 1 consists preferably of at least two succeeding opening pulses of different duration such as a short pulse having a duration of 0.5 second followed by a longer pulse having a duration of 2 seconds. The air blow caused by the first short opening pulse will blow away droplets of water contained in the coolant sprayed during operation of the drilling instrument, whereas the following air blow will cause efficient drying of the cavity. The minimum duration of the movement of the control member 14 out of the home position prescribed as a condition for energization of the drilling instrument 1 may amount, for example, to 0.5 second. Thus, the above-mentioned air blow caused by a short movement of the control member 14 may be continuously extended by repeated short movement of the control member 14 within an actuation time corresponding to the duration of the above-mentioned single opening pulse.

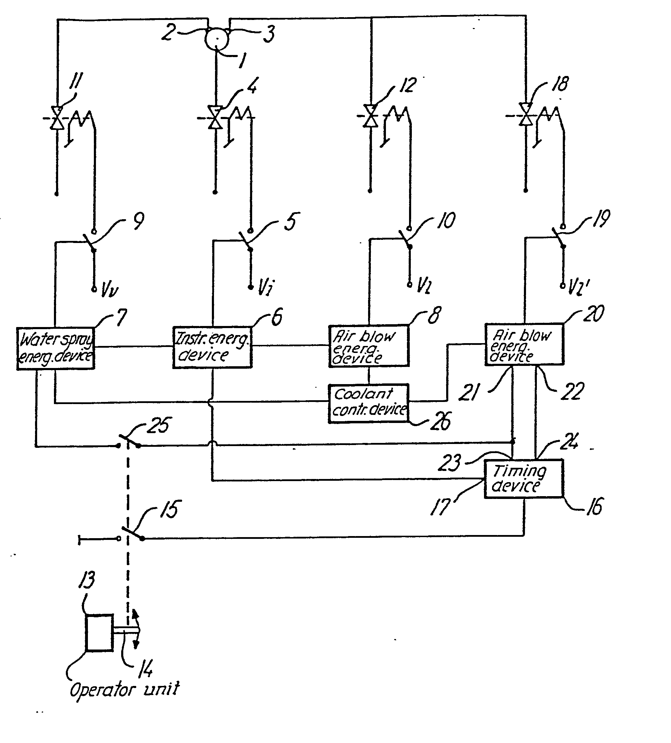

As shown in the drawing, since the control member 14 of the operator unit 13 may be movable to both sides out of the central home position, the first control signal appearing at the output 23 of the timing device 16 as result of a short movement of the control member 14 may be utilized either for energizing pure air blow as described in the foregoing by movement of the control member 14 to one side such as to the right or for energizing a flush spray consisting of a combination of water and air. For this purpose, the water spray energizing device 7 may be connected to the above-mentioned output 23 through a contact 25, which is opened by movement of the control member 14 to said one side for energizing a pure air blow and closed by movement of the control member 14 to said other side, in this case to the left, whereas in the central position the contact 25 will be open or closed dependent on the side to which the control member 14 has been moved beforehand.

In response to the first control signal supplied at output 23 of the timing device 16 the water spray energizing device 7 generates an opening signal for the magnetic valve 11 of the same duration as the above-mentioned first opening signal for the magnet valve 18.

The example shown and described represents a schematic and simplified embodiment of a dental apparatus according to the invention. Usually a dental apparatus will comprise several instruments connected to a common control circuit and a common operator unit having a control member used for controlling all the instruments, whereby an instrument selector device influenced by removal of instruments from an instrument carrier will prevent energization of more than one instrument at a time. In this case also the air blow generated according to the invention subsequent to operation of a drilling instrument may be realized for several instruments in the same dental apparatus, such as a drilling instrument powered by an electric motor with a variable rotational speed in addition to an air turbine powered instrument.

Since such a dental apparatus may be constructed for control of the water-air combination of the coolant, the automatic air blow according to the invention may be realized so that said second opening signal is only generated after spraying of a coolant comprising water. For this purpose a coolant control device 26 may be connected to the water spray and air blow energizing devices 7 and 8 for adjusting the combination of water and air in the coolant and the air blow energizing device may be constructed to block for supply of said second opening signal to the magnetic valve 18, when the coolant control device 26 is adjusted to influence the water spray energizing device 7 to block for the supply of water to the coolant.

The control of the air blow provided in accordance with the invention subsequent to operation of a drilling instrument may be realized by means of a control circuit built up in a conventional manner of separate logic components or it may be incorporated in a microprocessor control of a dental apparatus such as explained in applicant's European patent No. 42268.

### Claims

1. A dental apparatus comprising at least one drilling instrument (1) and an operator unit (13) with a control member (14) which is movable against spring action out of a home position for energizing and controlling said drilling instrument (1) through an instrument energizing device (6), said drilling instrument (1) being provided with a water spraying device (2) and an air blowing device (3), for producing a coolant spray during operation of the instrument, which are connected to a water supply and an air supply, respectively, through valve devices (11, 12) controlled by water spray and air blow energizing devices (7, 8) connected to said instrument energizing device (6), a selectively actuatable air blow energizing device (20) with an associated valve device (18, 19) being provided at least for said air blowing device (3) for producing a pure air blow during standstill of the instrument, characterized in that the selectively actuatable air blow energizing device (20) is connected to said operator unit (13) and adapted to produce an opening signal for the associated valve device (18, 19) in response to the return of said control member (14) to said home position following a movement out of said position.

2. A dental apparatus as claimed in claim 1, characterized in that a timing device (16) is connected between said selectively actuatable air blow energizing device (20) and said operator unit (13) for measuring the duration of the movement of the control member (14) out of said home position and said selectively actuatable air blow energizing device (20) is constructed to produce first or second opening signals for the associated valve device (18) in response to the duration of the movement of the control member (14) being shorter or longer, respectively, than a prescribed minimum duration.

3. A dental apparatus as claimed in claim 2, characterized in that said first opening signal comprises a single opening pulse, whereas said second opening signal comprises at least two succeeding opening pulses of different duration.

4. A dental apparatus as claimed in claim 2, characterized in that also the water spray energizing device (7) is connected to said timing device (16) for producing an opening signal for its associated valve device (11) at a shorter duration of the movement of said control member (14) than said prescribed minimum duration.

5. A dental apparatus as claimed in claim 4, characterized in that the control member (14) of the operator unit (13) is movable in opposite directions out of said home position, a contact (25) controlled by the operator unit (13) being disposed between the water spray energizing device (7) and the timing device (16) for interrupting the connection there between by movement of said control member (14) in one of said directions.

6. A dental apparatus as claimed in any of claims 2 to 5, characterized in that said water spray and air blow energizing devices (7, 8) are connected to a coolant control device (26) for adjusting the combination of water and air in the coolant spray, said selectively actuatable air blow energizing device (20) being constructed to block for supplying said second opening signal to the associated valve device (18) by adjustment of said coolant control device (26) for actuating said water spray device (7) to block for the supply of water into the coolant.

### Revendications

1. Appareil dentaire avec au moins une fraise (1) et une unité de commutation (13), cette dernière comprenant un organe de commande (14) qui est déplaçable contre la charge d'un ressort à partir d'une position d'attente pour effectuer un mouvement d'actionnement et de commande de ladite fraise (1) à l'aide d'un dispositif d'actionnement et de commande d'instrument (6), ladite fraise (1) étant pourvue d'un dispositif d'aspersion d'eau (2) et d'un dispositif soufflant (3) pour produire une aspersion refroidissante d'air et d'eau lors de l'actionnement des instruments qui sont reliés respectivement à une source d'eau et à une source d'air à l'aide de valves (11, 12) commandées par des dispositifs (7, 8) d'actionnement de l'aspersion d'eau et d'air connectés audit dispositif d'actionnement et de commande d'instrument (6), un dispositif d'actionnement sélectif du souffleur d'air (20) avec une valve associée (18, 19) étant destiné à produire, au moins pour ledit dispositif soufflant (3), un soufflement d'air pur lors de l'immobilisation de l'instrument, caractérisé en ce que le dispositif d'actionnement sélectif du souffleur d'air (20) est connecté à ladite unité de commutation (13) et agencé pour produire un signal d'ouverture de la valve associée (18, 19) en réponse au retour dudit organe de commande (14) à ladite position d'attente qui suit un mouvement hors de ladite position.

2. Appareil dentaire selon la revendication 1, caractérisé en ce qu'un dispositif à minuterie (16) est connecté entre ledit dispositif (20) d'actionnement sélectif du souffleur d'air et ladite unité de commutation (13) pour mesurer la durée du mouvement de l'organe de commande (14) de la dite position d'attente et en ce que ledit dispositif (20) d'actionnement sélectif du souffleur d'air est agencé pour produire un premier ou deuxième signal d'ouverture de la valve associée (18) en réponse à la durée du mouvement de l'organe de commande (14), cette durée étant respectivement plus courte ou plus longue qu'une durée minimum prescrite.

3. Appareil dentaire selon la revendication 2, caractérisé en ce que ledit premier signal d'ouverture comprend une seule impulsion d'ouverture, tandis que ledit deuxième signal d'ouverture comprend au moins deux impulsions successives d'ouverture de durées différentes.

4. Appareil dentaire selon la revendication 2, caractérisé en ce que le dispositif d'actionnement de l'aspersion d'eau (7) est connecté audit dispositif à minuterie (16) pour produire un signal d'ouverture de sa valve associée (11), d'une durée de mouvement dudit organe de commande (14) plus courte que ladite durée minimum prescrite.

5. Appareil dentaire selon la revendication 4, caractérisé en ce que l'organe de commande (14) de l'unité de commutation (13) est déplaçable dans des directions opposées hors de ladite position d'attente, un interrupteur (25), commandé par l'unité de commutation (13), étant monté entre le dispositif (7) d'actionnement de l'aspersion d'eau et le dispositif à minuterie (16), pour couper le courant entre eux par déplacement dudit organe de commande (14) dans une desdites directions.

6. Appareil dentaire selon une quelconque des revendications 2 à 5, caractérisé en ce que les dispositifs (7, 8) d'actionnement de l'aspersion d'eau et d'air sont connectés à un dispositif (26) de commande d'agent refroidissant pour ajuster la combinaison d'eau et d'air dans l'aspersion refroisissante, ledit dispositif (20) d'actionnement sélectif du souffleur d'air étant agencé pour bloquer l'émission dudit deuxième signal d'ouverture de la valve associée (18) en ajustant ledit dispositif (26) de commande d'agent refroisissant (26) pour actionner dudit dispositif (7) d'actionnement de l'aspersion d'eau pour bloquer l'introduction d'eau dans l'agent refroidissant.

## Patentansprüche

1. Zahnärztliches Gerät mit mindestens einem Bohrinstrument (1) und einer Bedienungseinheit (13) mit einem Regulierglied (14), welches zum Betätigen und zur Steuerung des Bohrinstruments (1) über eine Instrumentenbetätigungsvorrichtung (6) gegen eine Federbelastung aus einer Ruhestellung hinaus bewegbar ist, wobei das Bohrinstrument (1) mit einer Wassersprühvorrichtung (2) und einer Luftausblasvorrichtung (3) versehen ist, zum Erzeugen eines Kühlmittelsprühregens während des Betriebes des Instrumentes, welche Vorrichtungen über Ventilorgane (11, 12) mit einem Wasservorrat bzw. einem Luftvorrat verbunden sind, die von an die Instrumentenbetätigungsvorrichtung (6) angeschlossenen Wassersprüh- und Luftblasbetätigungsvorrichtungen (7, 8) gesteuert werden, wobei mindestens für die Luftblasvorrichtung (3) eine selektiv aktivierbare Luftblasbetätigungsvorrichtung (20) mit dazugehörigem Ventilorgan (18, 19) zum Erzeugen eines reinen Luftstroms während des Stillstandes des Bohrinstrumentes vorgesehen ist, dadurch gekennzeichnet, dass die selektiv aktivierbare Luftblasbetätigungsvorrichtung (20) mit der Bedienungseinheit (13) verbunden und dazu eingerichtet ist, bei der Rückkehr des Reguliergliedes (14) in die Ruhestellung im Anschluss an eine Bewegung aus der Ruhestellung hinaus ein Oeffnungssignal für die dazugehörigen Ventilorgane (18, 19) zu erzeugen.

2. Zahnärztliches Gerät nach Anspruch 1, dadurch gekennzeichnet, dass zwischen der selektiv aktivierbaren Luftblasbetätigungsvorrichtung (20) und der Bedienungseinheit (13) eine Zeitsteuervorrichtung (16) eingeschaltet ist, zum Erfassen der Dauer der Bewegung des Reguliergliedes (14) aus der Ruhestellung hinaus, und dass die selektiv aktivierbare Luftblasbetätigungsvorrichtung (20) dazu eingerichtet ist, ein erstes oder ein zweites Oeffnungssignal für das dazugehörige Ventilorgan (18) zu erzeugen, abhängig davon, ob die Bewegungsdauer des Reguliergliedes (14) kürzer bzw. länger ist als eine vorgeschriebene Mindestdauer.

3. Zahnärztliches Gerät nach Anspruch 2, dadurch gekennzeichnet, dass das erste Oeffnungssignal aus einem einzigen Oeffnungsimpuls besteht, während das zweite Oeffnungssignal aus mindestens zwei nacheinander folgenden Oeffnungsimpulsen verschiedener Dauer besteht.

4. Zahnärztliches Gerät nach Anspruch 2, dadurch gekennzeichnet, dass die Wassersprühbetätigungsvorrichtung (7) mit der Zeitsteuervorrichtung verbunden ist, zum Erzeugen eines Oeffnungssignals für das dazugehörige Ventilorgan (11) im Falle einer kürzeren Dauer der Bewegung des Reguliergliedes (14) als die vorgeschriebene Mindestdauer.

5. Zahnärztliches Gerät nach Anspruch 4, dadurch gekennzeichnet, dass das Regulierglied (14) der Bedienungseinheit (13) aus der Ruhestellung heraus in entgegengesetzte Richtungen bewegt werden kann, und dass zwischen der Wassersprühbetätigungsvorrichtung (7) und der Zeitsteuervorrichtung (16) ein von der Bedienungseinheit (13) gesteuerter Kontakt (25) zum Unterbrechen der Verbindung zwischen diesen bei einer Bewegung des Reguliergliedes (14) in eine der Bewegungsrichtungen angeordnet ist.

6. Zahnärztliches Gerät nach Anspruch 2—5, dadurch gekennzeichnet, dass die Wassersprüh- und Luftblasbetätigungsvorrichtungen (7, 8) mit einer Kühlmittelsteuervorrichtung (26) verbunden sind, zum Einstellen der Luft-Wasser-Kombination im Kühlspray, und dass die selektiv aktivierbare Luftblasbetätigungsvorrichtung (20) dazu eingerichtet ist, die Abgabe des zweiten Oeffnungssignals an das dazugehörige Ventilorgan (18) blockieren zu können, durch Einstellen der Kühlmittelsteuervorrichtung (26) zum Betätigen der Wassersprühvorrichtung (17) zum Blokkieren der Wasserzufuhr zum Kühlmittel.